# EUROPÄISCHE PATENTANMELDUNG

(11) **EP 0 872 933 A1**
(43) Veröffentlichungstag der Anmeldung: **21.10.1998**
(21) Anmeldenummer: 98105068.5
(22) Anmeldetag: 20.03.1998
(51) Int. Cl.: H02B 13/025

(54) **In einem Container untergebrachte Schaltanlage**

(30) Priorität: 18.04.1997 DE 19716282
(71) Anmelder: ABB PATENT GmbH, 68309 Mannheim (DE)
(72) Erfinder: Schippel, Harald, Dipl.-Ing., 40882 Ratingen (DE); Schneider, Joachim, Dr.-Ing., 69509 Mörlenbach (DE); Gföllner, Thomas, 4710 Grieskirchen (AT); Loisel, Helmut, 4710 Grieskirchen (AT)
(74) Vertreter: Rupprecht, Klaus, Dipl.-Ing.

(57) **Zusammenfassung**

Die Erfindung betrifft ein in einem Container (12) untergebrachte Schaltanlage (10, 11) insbesondere für Mittelspannung, mit mehreren Schaltfeldern, an deren oberer Seite Ausblasöffnungen (24, 25) für Gase vorgesehen sind, die bei innerhalb eines der Schaltfelder entstehenden Störlichtbögen auftreten, und deren obere Seite zum Dach des Containers (12) einen Abstand aufweist. Zwischen der oberen Seite der Schaltfelder (10, 11) jeder Reihe und des Containers (12) ist ein mit der Frontseite der Schaltfelder (10, 11) jeder Reihe fluchtende Schottwand (20, 21) angeordnet ist, so daß zwischen der oberen Seite jedes Schaltfeldes bzw. einer Schaltfeldreihe, dem Container und der Schottwand oberhalb des Schaltfeldes je ein Kanal (22, 23) zur Führung der Gase verläuft. Der Container (12) weist im Bereich jedes Kanals (22, 23) wenigstens eine aufreißbare Öffnung (24, 25) auf.

## Beschreibung

Die Erfindung betrifft eine in einem Container untergebrachte Schaltanlage, insbesondere für Mittelspannung, gemäß dem Oberbegriff des Anspruches 1.

Die einzelnen Schaltfelder einer Mittelspannungsanlage besitzen Vorkehrungen dagegen, daß bei einem Störlichtbogen in der Nähe der Schaltanlage befindliche Personen durch austretende Gase gefährdet werden. Zu diesem Zweck weist ein Schaltfeld im Bereich des Daches Öffnungen auf, die mittels geeigneter Platten verschlossen sind, die im Falle eines starken Druckanstieges aufgrund eines Störlichtbogens gezielt öffnen bzw. aufreißen.

Aufgabe der Erfindung ist es, bei einer in einem Container untergebrachten Schaltanlage eine gefahrlose Abführung von heißen Gasen zu ermöglichen.

Diese Aufgabe wird erfindungsgemäß gelöst durch die kennzeichnenden Merkmale des Anspruches 1.

Die einzelnen Schaltfelder einer Mittelspannungsschaltanlage sind in einem Container so aufgestellt, daß sie gegen die Längsseitenwände des Containers mit ihren Rückwänden anstehen; zwischen dem Dach der Mittelspannungsanlage und dem Dach des Containers ist ein Abstand vorhanden. Im Bereich der vorderen Seite der Schaltanlage bzw. der Schaltfelder, die in einer Reihe stehen, ist der Zwischenraum zwischen dem Dach der Schaltfelder und dem Dach der Container mit einer Kanalwand oder Schottwand verschlossen, so daß sich zwischen dem Dach bzw. den Dächern der Schaltfelder und dem Dach und dem freien Bereich der Seitenwand des Containers ein Kanal bildet, der alle Schaltfelder überdeckt und in dessen Bereich sich eine aufreißbare Öffnung im Dach des Containers befindet. Es besteht auch die Möglichkeit, daß die aufreißbare Öffnung an der Seitenwand durch eine Klappe verschlossen ist, wie z. B. in dem DE-GM 296 15 011.8 beschrieben.

In einer besonders vorteilhaften Ausgestaltung ist die Öffnung mit einer Blechplatte verschlossen, deren eine Kante mit Metallschrauben und deren andere Kanten mit aufreißbaren Kunststoffschrauben am Containerdach befestigt sind. Dadurch wird erreicht, daß die Kunststoffschrauben bei einem starken Druckanstieg abreißen, wogegen die Metallschrauben die Blechplatte festhalten; die Blechplatte biegt dann auf entlang einer Kante, die parallel zu der Reihe der Metallschrauben verläuft.

Es besteht natürlich auch die Möglichkeit, daß eine Blechplatte vorgesehen ist, die an einem großen Teil des Umfangsbereiches Vorprägungen als Sollreißstellen aufweist. Wenn die Blechplatte viereckig ist, dann sind diese Vorprägungen an drei Kanten vorgesehen.

Weitere vorteilhafte Ausgestaltungen und Verbesserungen der Erfindung ergeben sich aus den weiteren Unteransprüchen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Querschnittsansicht eines Containers mit einer Mittelspannungsschaltanlage, in schematischer Darstellung, und
- Fig. 2: eine Schnittansicht durch einen Teilbereich des Daches, an dem sich eine Berstplatte befindet.

Eine Mittelspannungsschaltanlage besitzt zwei Reihen von Schaltfeldern 10, 11, die in einem Container 12 aufgestellt sind, dergestalt, daß die Rückwände gegen die Längsseitenwände 13 und 14 anlegen.

Zwischen den oberen Wänden 15 und 16 (auch Dächer genannt) der beiden Reihen der Schaltfelder 10, 11 und der Innenfläche des Daches 17 des Containers ist ein Zwischenraum bzw. ein Abstand D, dessen Wert von der Höhe der Schaltfelder 10, 11 abhängt.

Fluchtend mit den Vorderseiten 18, 19 der Schaltfelder 10, 11 sind Schottwände oder Trennwände 20, 21 an den Oberseiten 16, 15 der Schaltfelder 10, 11 befestigt, die bis zum Dach 17 reichen. Dadurch wird zwischen den Schaltfeldern 10, 11 und dem Dach ein geschlossener Kanal 22, 23 gebildet, der über die gesamte Schaltfeldreihe jeder Seite verläuft. Dort wo die Reihen der Schaltfelder 10, 11 in Abstand zu den Stirnwänden des Containers stehen, ist eine entsprechende Schottwand vorgesehen, die mit den freien Seitenwänden der Schaltfeldreihe fluchtet, so daß die Kanäle 22, 23 in jedem Fall an den Enden der Schaltfeldreihen 10, 11 abgeschlossen sind.

Im Bereich der Kanäle 22, 23 befinden sich Öffnungen 24, 25, die mittels einer Blechplatte 26, 27 verschlossen sind.

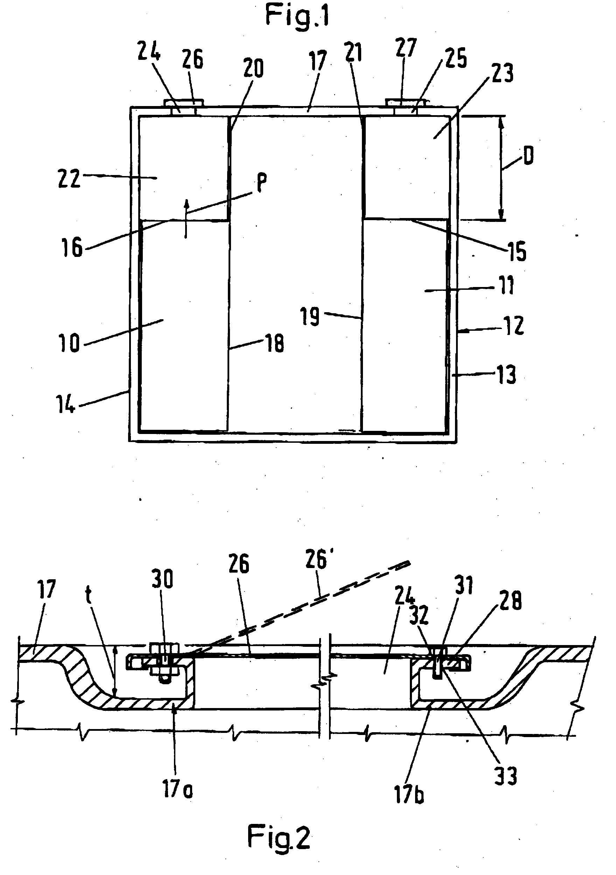

Die Fig. 2 zeigt eine solche Anordnung. Am Dach 17 ist beispielsweise für die Öffnung 24 ein Einzug 17a vorgesehen, in dem sich die Öffnung 24 befindet. Die der Öffnung 24 benachbarten Bereiche des Daches 17 sind außen umgebördelt, so daß sich eine U-Form bildet, deren einer Schenkel der Boden 17b des Einzuges 17a und deren anderer Schenke 28 um die Öffnung 24 umlaufend parallel zum Boden 17b verläuft. Die U-Form ist, bezogen auf die Öffnung 24, nach außen offen. Auf die Außenfläche des umlaufenden Schenkels 28, der einen Flanschrand bildet, ist die Blechplatte 26 gelegt, die der rechteckigen Form der Öffnung 24 angepaßt ist und die umlaufende freie Kante des Schenkels 28 überdeckt. An einer Längskante ist die Blechplatte 26 mittels Metallschrauben 30 am Schenke 28 befestigt, wogegen an den drei anderen Kanten Kunststoffschrauben 31 vorgesehen sind, die Löcher 32 in der Blechplatte 26 durchgreifen und in entsprechende Gewindebohrungen 33 am Schenkel 28 eingreifen. Die Tiefe t des Einzuges 17a ist so bemessen, daß die Blechplatte 26 und die Schraubenköpfe der Schrauben 30, 31 innerhalb der Außenfläche der Containerwand bzw. des Daches 17 liegen.

Wenn sich nun innerhalb eines Schaltfeldes ein hoher Druck aufgrund eines Störlichtbogens ausbildet, dann wird sich eine in Fig. 1 nicht näher dargestellte Öffnung am Schaltfeld z. B. am Schaltfeld 10, öffnen, so daß heiße Druckgase gemäß Pfeilrichtung P in den Kanal 22 z. B. austreten können. Im Kanal 22 pflanzt sich die Druckerhöhung fort und je nach Druckerhöhungswert werden die Kunststoffschrauben 31 abgerissen, so daß die Blechplatte 26 lediglich mit den Metallschrauben 30 an einer Kante festgehalten wird, so daß die Blechplatte 26 aufgebogen wird und die mit 26' eingezeichnete Stellung einnimmt. Eine solche Klappe kann natürlich auch im Bereich der Kanäle 22, 23 an den Seitenwandungen 14, 13 des Containers 12 vorgesehen sein.

Für die Blechplatte 27 gilt dasselbe.

## Patentansprüche

1. In einem Container untergebrachte Schaltanlage insbesondere für Mittelspannung, mit mehreren Schaltfeldern, an deren oberer Seite Ausblasöffnungen für Gase vorgesehen sind, die bei innerhalb des Schaltfeldes entstehenden Störlichtbögen auftreten, und deren obere Seite zum Dach des Containers einen Abstand aufweist, dadurch gekennzeichnet, daß zwischen der oberen Seite der Schaltfelder (10, 11) jeder Reihe und des Containers (12) je eine mit der Frontseite der Schaltfelder (10, 11) jeder Reihe fluchtende Schottwand (20, 21) angeordnet ist, so daß zwischen der oberen Seite jedes Schaltfeldes (10, 11) bzw. einer Schaltfeldreihe, dem Container (12) und der Schottwand (20, 21) oberhalb der Schaltfelder je ein Kanal (22, 23) zur Führung der Gase verläuft und daß der Container (12) im Bereich jedes Kanals (22, 23) wenigstens eine aufreißbare Öffnung (24, 25) aufweist.

2. Schaltanlage nach Anspruch 1, dadurch gekennzeichnet, daß die Öffnung mit einer Blechplatte (26, 27) verschlossen ist, deren eine Kante mit Metallschrauben (30) und deren andere Kanten mit aufreißbaren Kunststoffschrauben (31) am Containerdach (17) oder an einer Containerwand befestigt sind.

3. Schaltanlage nach Anspruch 1, dadurch gekennzeichnet, daß die Blechplatte (26, 27) an dem Container festgeschraubt ist und Vorprägungen als Sollreißstellen aufweist.

4. Schaltanlage nach einem der vorherigen Ansprüche, dadurch gekennzeichnet, daß das Containerdach (17) oder die -wand einen Einzug (17a) aufweist, in dem sich je eine Öffnung (24, 25) befindet und dessen Tiefe (t) so bemessen ist, daß alle Teile für die aufreißbare Öffnung innerhalb der Außenfläche des Containerdaches (17) oder der -wand liegen.

5. Schaltanlage nach Anspruch 2 bis 4, dadurch gekennzeichnet, daß die Öffnung (24, 25) von einer Umbördelung mit einem radialen Flanschrand (28) umgeben ist, und daß die Blechplatte (26) auf dem Flanschrand (28) befestigt ist.
